# EUROPÄISCHE PATENTSCHRIFT

(11) **EP 0 721 407 B1**
(45) Veröffentlichungstag und Bekanntmachung des Hinweises auf die Patenterteilung: **02.08.2000**
(21) Anmeldenummer: 95920734.1
(22) Anmeldetag: 30.05.1995
(51) Int. Cl.: B60S 1/08

(54) **MESSEINRICHTUNG**
SENSOR
DISPOSITIF DE MESURE

(30) Priorität: 16.08.1994 DE 4428995
(43) Veröffentlichungstag der Anmeldung: 17.07.1996
(73) Patentinhaber: ROBERT BOSCH GMBH, 70442 Stuttgart (DE)
(72) Erfinder: KLAPPENBACH, Christoph, D-77815 Bühl (DE); BURKART, Manfred, D-76473 Iffezheim (DE)
(86) Internationale Anmeldenummer: DE9500699
(87) Internationale Veröffentlichungsnummer: WO9605087

(56) Entgegenhaltungen:
- DE-A- 4 343 474
- DE-C- 3 823 300
- DE-C- 4 202 121

## Beschreibung

### Stand der Technik

Meßeinrichtungen der im Oberbegriff des Anspruchs 1 bezeichneten Art messen die am Empfänger ankommende Lichtmenge und vergleichen diese mit der vom Sender in die Scheibe eingeleiteten Lichtmenge. Überschreitet die sich ergebende Differenz einen vorgegebenen Wert, wird über die Auswertevorrichtung die Scheibenwischvorrichtung des Kraftfahrzeuges aktiviert, weil in diesem Fall davon ausgegangen wird, daß der Lichtverlust in der Meßstrecke durch Regen, Schnee oder sonstige Verschmutzungen hervorgerufen wird. Bei bekannten, im Handel befindlichen Meßeinrichtungen der gattungsgemäßen Art kann eine Fehlmessung und damit eine ungerechtfertigte Betätigung der Scheibenvorrichtung beispielsweise durch an der Innenseite der Scheibe gebildetes Kondenswasser hervorgerufen werden, weil die Meßeinrichtung stets außerhalb des Sichtfeldes des Fahrers, also im Bereich des Innenrückspiegels plaziert ist. Da dort die Bildung von Kondenswasser auch durch das Warmluftgebläse nicht zuverlässig vermieden werden kann, kommt es immer wieder zu unerwünschtem, lästigem und ungerechtfertigtem Betrieb der Wischanlage.

In der gattungsbildenden DE 43 43 474 A1 wird eine Sensoreinrichtung vorgestellt, in der ein plattenförmiger Abschnitt als Heizplatte mittels zweier Federn gegen die Scheibe gedrückt wird. Auf dieser Heizplatte befindet sich ein Heizelement, welches durch die beiden Federn kontaktiert wird.

### Vorteile der Erfindung

Die erfindungsgemäße Meßeinrichtung mit den kennzeichnenden Merkmalen des Hauptanspruchs hat demgegenüber den Vorteil, daß das beheizbare Bauelement stets für eine kondenswasserfreie Meßstrecke sorgt, so daß ein Fehlverhalten der Wischvorrichtung zuverlässig vermieden ist.

Durch die in den Unteransprüchen aufgeführten Maßnahmen sind vorteilhafte Weiterbildungen und Verbesserungen der im Hauptanspruch angegebenen Meßeinrichtung möglich.

### Zeichnung

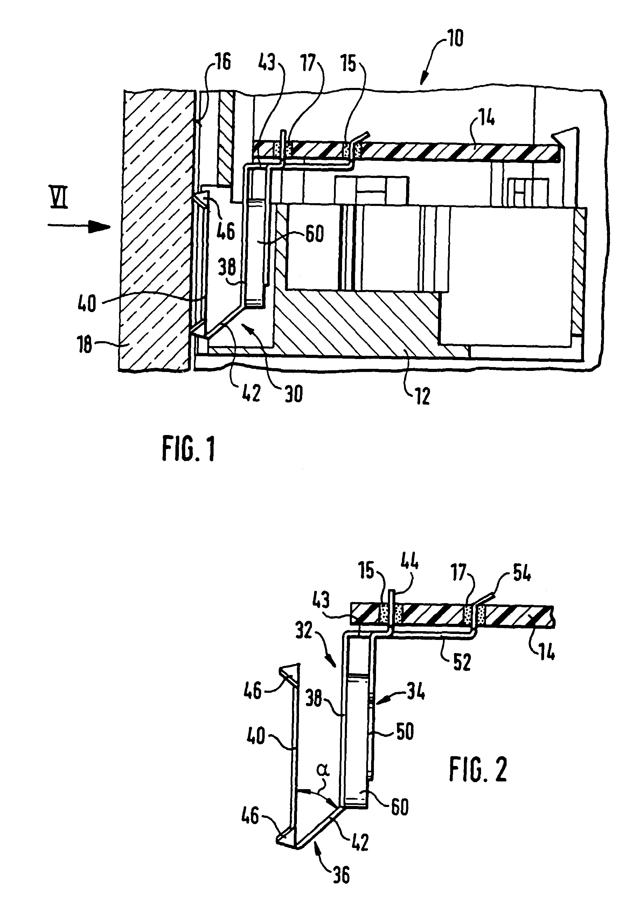

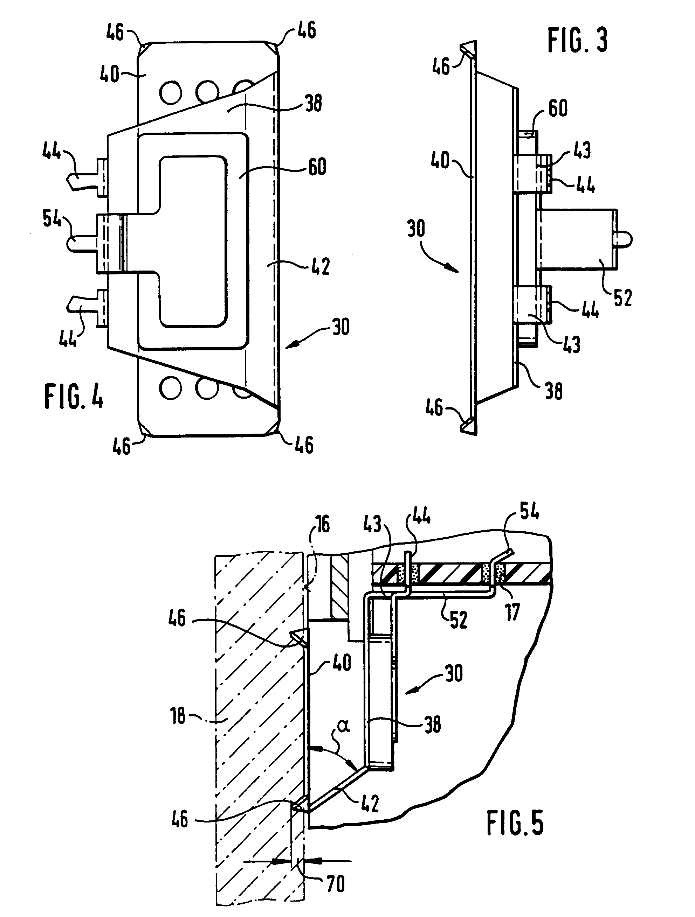

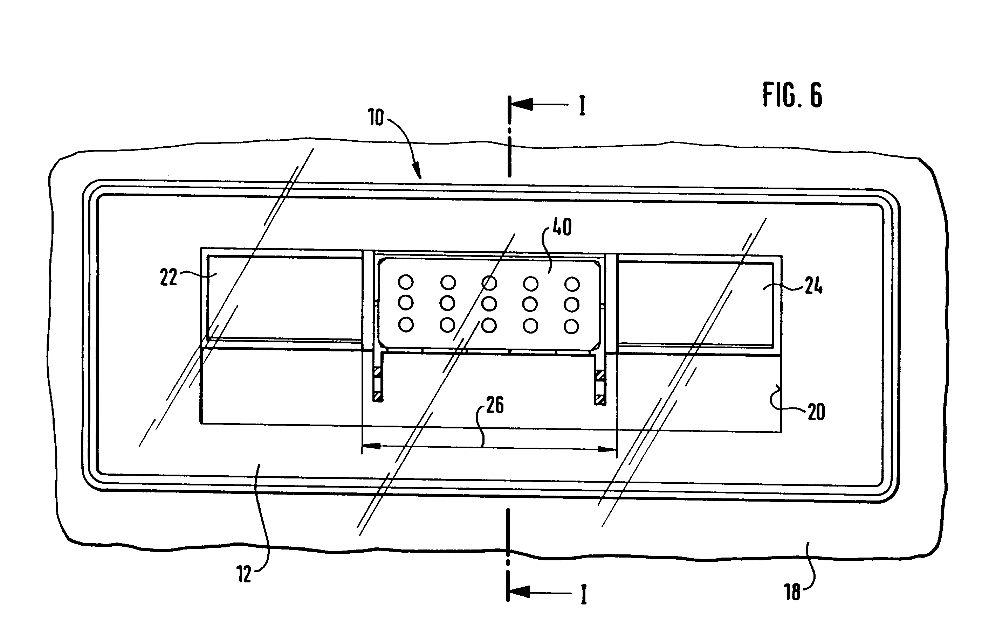

Ein Ausführungsbeispiel der Erfindung ist in der Zeichnung dargestellt und in der nachfolgenden Beschreibung näher erläutert. Es zeigen Figur 1 einen Schnitt durch eine vergrößert dargestellte erfindungsgemäße Meßeinrichtung und einen Teilbereich der Windschutzscheibe eines Kraftfahrzeuges, entlang der Linie I-I in Figur 6, Figur 2 ein zur Meßeinrichtung gehörendes, mit einem Heizelement versehenes Bauelement und ein Teilbereich eines das Bauelement tragenden Tragelements gemäß Figur 1 geschnitten, Figur 3 das Bauelement gemäß Figur 2 in Seitenansicht, Figur 4 das Bauelement gemäß den Figuren 2 und 3 in Draufsicht, Figur 5 ein Teilbereich der Anordnung gemäß Figur 1, ohne die Windschutzscheibe und Figur 6 eine Ansicht der Anordnung gemäß Figur 1 in Richtung des Pfeiles VI gesehen.

### Beschreibung des Ausführungsbeispiels

Eine in Figur 1 dargestellte Meßeinrichtung 10 hat ein Gehäuse, das in Figur 1 teilweise erkennbar und mit der Bezugszahl 12 versehen worden ist. Zu der Meßeinrichtung 10 gehört ein als Leiterplatte 14 ausgebildetes Tragelement, das in dem Gehäuse 12 fest, jedoch lösbar verankert ist. Die Meßeinrichtung 10 ist an der Innenseite 16 der Windschutzscheibe 18 eines nicht näher dargestellten Kraftfahrzeuges befestigt (Figuren 1 und 6). Das Gehäuse 12 ist an seiner der Windschutzscheibe 18 zugewandten Seite partiell geöffnet. Es weist also einen Durchbruch 20 auf, der einen Blick auf funktionswesentliche Elemente der Meßeinrichtung 10 gestattet. Zur Meßeinrichtung gehören ein Sender 22 und ein Empfänger 24, die mit einem Abstand 26 von einander angeordnet sind (Figur 6). Die durch den Abstand 26 sich ergebende Strecke bildet eine Meßstrecke für vom Sender 22 in die Windschutzscheibe 18 eingekoppelte Lichtstrahlen, deren Intensität durch den Empfänger 24 gemessen wird. Dabei werden die Lichtstrahlen vom Sender 22 unter dem Winkel der Totalreflexion in die Scheibe 18 eingeleitet. Der Empfänger 24 mißt die Intensität der bei ihm noch ankommenden Lichtstrahlen und führt das Ergebnis seiner Messung einer nicht dargestellten Auswerteeinrichtung zu. Sowohl der Sender 22 als auch der Empfänger 24 der Meßeinrichtung 10 sind zu diesem Zweck mit der inneren Oberfläche 16 der Windschutzscheibe 18 optisch gekoppelt. Die Anordnung der Meßeinrichtung 10 an der Innenseite der Windschutzscheibe 18 ist so getroffen, daß sich diese innerhalb eines Wischfeldes befindet, welches von einer zum Kraftfahrzeug gehörenden, in der Zeichnung nicht dargestellten Wischvorrichtung überstrichen wird. Um eine Beeinträchtigung der Sicht der Kraftfahrzeuglenkers möglich gering zu halten, befindet sich die Meßeinrichtung 10 üblicher Weise in der Nähe des oberen Randes der Windschutzscheibe 18 und in deren Mittenbereich, wo auch der Innenrückspiegel angeordnet ist. Zur Meßeinrichtung 10 gehört ferner noch ein Bauelement 30, dessen Ausgestaltung insbesondere aus den Figuren 2 bis 4 ersichtlich ist. Das Bauelement 30 ist zweiteilig ausgebildet. Zu ihm gehören ein Abstützteil 32 und ein Kontaktteil 34. Das Abstützteil 32 hat einen im Querschnitt im wesentlichen U-förmigen Grundkörper 36, dessen beide U-Schenkel 38 und 40 im wesentlichen parallel zueinander angeordnet sind. Der eine U-Schenkel 40 ist als plattenförmiger Abschnitt ausgebildet. An die eine Längskante des U-Schenkels 40 schließt sich eine als streifenförmiges Teil ausgebildete U-Basis 42 an, welche danach in den anderen U-Schenkel 38 übergeht. Das freie Ende des anderen U-Schenkels 38 geht in einen Stützwinkel 43 über, der zwei rechtwinklig abgewinkelte Anschlußzungen 44 aufweist. Der eine plattenförmige U-Schenkel 40 ist in seinen Eckbereichen mit abgeköpften Abstützbeinen 46 versehen, die sich zu der vom anderen U-Schenkel 38 abgewandten Seite hin erstrecken. Wie insbesondere die Figuren 1, 2 und 5 zeigen, schließen die in das Innere der U-Form gewandten Seiten des plattenförmigen U-Schenkels 40 und der streifenförmigen U-Basis 42 miteinander spitzen Winkel a ein. Die Anschlußzungen 44 durchdringen die Leiterplatte 14 in Bohrungen 15, in denen sie verklebt oder vergossen sind, so daß sich ein ordnungsgemäßer Sitz des Abstützteils 32 an der Leiterplatte 14 ergibt. Das Kontaktteil 34 weist eine Kontaktplatte 50 auf, die in einen zu dieser abgewinkelten Stützarm 52 übergeht, welcher an seinem von der Kontaktplatte 50 abgewandten Ende mit einer etwa rechtwinklig abgebogenen Anschlußfahne 54 versehen ist. Die Anschlußfahne 54 durchdringt ebenfalls die Leiterplatte 14 in einer Bohrung 17 und ist in dieser ebenso wie die Anschlußzungen 44 ortsfest gehalten. Die Anordnung der beiden Teile 32 und 34 des Bauelements 30 zueinander ist so getroffen, daß sich der andere U-Schenkel 38 des Abstützteils 32 und die Kontaktplatte 50 des Kontaktteils 34 zueinander parallel und mit Abstand voneinander erstrecken. Der Abstand zwischen der Kontaktplatte 50 und dem anderen U-Schenkel 38 ist auf die Dicke eines Heizelements 60 abgestimmt, welches auf die der Kontaktplatte 50 zugewandte Außenseite des U-Schenkels 38 des Abstützteils 32 so aufgebracht ist, daß der elektrische Kontakt zwischen dem Abstützteil 32 und dem Heizelement 16 ebensowenig beeinträchtigt ist wie der Wärmeübergang vom Heizelement 60 zum Abstützteil 32. Die Anordnung des Kontaktteils 34 ist beim Ausführungsbeispiel so getroffen, daß die Kontaktplatte 50 etwas vorgespannt an der ihr zugewandten Seite des blockförmigen Heizelements 60 anliegt. Die beiden zum Bauelement 30 gehörenden Teile 32 und 34 sind aus einem elektrisch leitenden Material hergestellt, das auch eine gute Wärmeleitfähigkeit aufweist. Besonders bewährt hat sich dafür CuSn₆F₄₈. Die Anschlußzungen 44 und die Anschlußfahne 54 dienen zum Anschließen der Leiter eines nicht näher dargestellten Heizstromkreises, nach dessen Aktivierung sich das Heizelement 60 erwärmt und seine Wärme insbesondere über die streifenförmige U-Basis 42 dem als Heizplatte dienenden einen U-Schenkel 40 des Abstützteils 32 zuführt.

Wenn die Meßeinrichtung 10 als solche vormontiert, jedoch noch nicht an der Windschutzscheibe 18 angebracht ist, ragt das Abstützteil 32 mit seinem einen U-Schenkel 40 aus dem Durchbruch 20 des Gehäuses 12 heraus wie das Maß 70 in Figur 5 belegt. Wenn jedoch die Meßeinrichtung 10 an der Innenseite 16 der Windschutzscheibe 18 befestigt ist, ergibt sich die in Figur 1 dargestellte Montagesituation, in welcher sich das Abstützteil 32 mit seinen Abstützbeinen 46 vorgespannt an der Innenseite 16 der Windschutzscheibe 18 abstützt. Dies ist deshalb möglich, weil das Bauelement 30 und insbesondere das Abstützteil 32 aus dem erwähnten Material besteht, das neben einer guten Wärmeleitfähigkeit bei ausreichender Zähigkeit auch gute Federungseigenschaften aufweist. Durch die Anordnung der U-Basis 42 unter einem spitzen Winkel α zum einen U-Schenkel 40 ist gewährleistet, daß das Abstützteil 32 seine gewünschte, zur Scheibe 18 vorgespannte Montagelage beibehält, die im wesentlichen parallel zur Innenseite 16 der Windschutzscheibe 18 liegt. Die vorsprungartigen Abstützbeine 46 sorgen für einen vorschriftsmäßigen Abstand zwischen der Innenseite 16 der Windschutzscheibe 18 und der dieser zugewandten, direkt gegenüberliegenden Außenseite des einen U-Schenkels 40, so daß eine zuverlässige Verdunstung des sich möglicherweise im Bereich der Meßstrecke 26 ansammelnden Kondenswassers gewährleistet ist.

Durch die besondere Ausgestaltung des Bauelelements 30 bzw. Abstützteils 32 ergeben sich Federmittel, welche nach der Montage der Meßeinrichtung 10 an der Windschutzscheibe 18 für eine Vorspannung sorgen, durch welche der als Heizplatte dienende U-Schenkel 40 mit seinen Abstützbeinen 46 an der Innenseite der Scheibe 18 angelegt ist. Zur Vermeidung von elektrischen Störungen ist es klar, daß das Abstützteil 32 und das Kontaktteil 34 voneinander elektrisch isoliert sein müssen. Dieses ist durch die besondere, zweiteilige Ausgestaltung des Bauelements 30 - die insbesondere aus den Figuren 2 bis 4 ersichtlich ist, gewährleistet.

## Patentansprüche

1. Meßeinrichtung (10) mit einem Sender (22) und einem mit Abstand von diesem angeordneten Empfänger (24), die beide optisch, im Bereich des von einer Wischvorrichtung überstrichenen Wischfeldes, mit einer Oberfläche der Scheibe (18) eines Kraftfahrzeuges gekoppelt sind, deren zwischen dem Sender (22) und dem Empfänger (24) befindlicher Bereich eine Meßstrecke (26) für einen vom Sender (22) unter dem Winkel der Totalreflexion in die Scheibe (18) eingeleiteten Lichtstrahl bildet, der vom Empfänger (24) aufgenommen und einer Auswerteeinrichtung zugeführt wird, wobei sowohl der Sender (22) als auch der Empfänger (24) in einem an der Innenseite der Scheibe (18) gehaltenen Gehäuse (12) untergebracht und über ein vorzugsweise gemeinsames Tragelement (14) in diesem gehalten sind, wobei in dem zur Scheibe (18) zumindest partiell offenen Gehäuse (12) ein mit einem plattenförmigen Abschnitt (40) der Meßstrecke (26) direkt gegenüberliegendes, aus einem gut wärmeleitenden Material bestehendes, beheizbares Bauelement (30) angeordnet ist, das an dem Gehäuse (12) abgestützt ist, dadurch gekennzeichnet, daß lediglich der Abschnitt (40) des Bauelementes (30) über vorgespannte Federmittel (40, 42, 38) eines Abstützsteiles (32) zur Scheibe (18) belastet ist und daß das Abstützteil (32) aus elastischem Material einen im wesentlichen U-förmigen Grundkörper (36) aufweist, dessen Schenkel (38, 40) im wesentlichen parallel zueinander angeordnet sind, wobei der eine Schenkel den plattenförmigen Abschnitt (40) und der andere Schenkel eine Tragplatte (38) für ein Heizelement (60) bildet.

2. Meßeinrichtung nach Anspruch 1, dadurch gekennzeichnet, daß der plattenförmige Abschnitt (40) des Bauelements (30) mit seiner einen Plattenfläche der Innenseite (16) der Scheibe (18) zugewandt und über mit dem plattenförmigen Abschnitt (40) verbundene Vorsprünge (46) an der Scheibe (18) abgestützt ist.

3. Meßeinrichtung nach Anspruch 2, dadurch gekennzeichnet, daß das Bauelement (30) aus elastischem Material über an dem Tragelement (14) verankerte und mit dem plattenförmigen Abschnitt (40) verbundene Federmittel (40, 42, 38) verfügt.

4. Meßeinrichtung nach Anspruch 3, dadurch gekennzeichnet, daß die Federmittel (40, 42, 38) einen mit der einen Längsseite des plattenförmigen Abschnitts (40) verbundenen, mit dessen Plattenfläche einen spitzen Winkel (α) einschließenden Streifen (42) aufweisen, der in die zum plattenförmigen Abschnitt (40) mit Abstand und zu diesem etwa parallel angeordnete Tragplatte (38) übergeht.

5. Meßeinrichtung nach Anspruch 4, dadurch gekennzeichnet, daß auf der von dem plattenförmigen Abschnitt (40) abgewandten Seite der Tragplatte (38) das Heizelement (60) angeordnet ist.

6. Meßeinrichtung nach Anspruch 5, dadurch gekennzeichnet, daß das Bauelement (30) zwei mit der Tragplatte (38) verbundene Anschlußzungen (44) aufweist, welche das Tragelement (14) durchdringen und an diesem fixiert sind.

7. Meßeinrichtung nach einem der Ansprüche 5 oder 6, dadurch gekennzeichnet, daß zu dem Bauelement (30) ein Kontaktelement (34) aus einem elektrisch leitenden Material gehört, das sich an der von der Tragplatte (38) abgewandten Seite des Heizelements (60) an diesem abstützt, mit einer Anschlußfahne (54) das Tragelement (14) durchdringt und in diesem fixiert ist.

8. Meßeinrichtung nach Anspruch 7, dadurch gekennzeichnet, daß die zu dem Bauelement (30) gehörenden Einzelteile (32) und (34) voneinander elektrisch isoliert sind.

9. Meßeinrichtung nach einem der Ansprüche 1 bis 8, dadurch gekennzeichnet, daß zumindest das zu dem Bauelement (30) gehörende Stützteil (32) aus CuSn₆F₄₈ besteht.

## Claims

1. Measuring device (10) having a transmitter (22) and a receiver (24) arranged at a distance from the latter, both of which are optically coupled, in the region of the wipe area swept over by a wiper device, to a surface of the window (18) of a motor vehicle, said window's region between the transmitter (22) and the receiver (24) forming a measurement section (26) for a light beam which is introduced into the window (18) by the transmitter (22) at the angle of total reflection, is picked up by the receiver (24) and is supplied to an evaluation device, the transmitter (22) and the receiver (24) both being accommodated in a housing (12) held on the inside of the window (18) and being held by means of a preferably common mounting element (14) in said housing, the housing (12), which is at least partially open towards the window (18), containing a heatable component (30) which is made of a highly thermally conductive material, has a plate-shaped portion (40) directly opposite the measurement section (26) and is supported on the housing (12), characterized in that only the portion (40) of the component (30) is loaded with respect to the window (18) via prestressed spring means (40, 42, 38) of a support part (32), and in that the support part (32), which is made of elastic material, has an essentially U-shaped basic body (36) whose limbs (38, 40) are arranged essentially parallel to one another, one limb forming the plate-shaped portion (40) and the other limb forming a mounting plate (38) for a heating element (60).

2. Measuring device according to Claim 1, characterized in that one plate face of the plate-shaped portion (40) of the component (30) faces the inside (16) of the window (18) and is supported on the window (18) by means of projections (46) connected to the plate-shaped portion (40).

3. Measuring device according to Claim 2, characterized in that the component (30), which is made of elastic material, is provided with spring means (40, 42, 38) anchored on the mounting element (14) and connected to the plate-shaped portion (40).

4. Measuring device according to Claim 3, characterized in that the spring means (40, 42, 38) have a strip (42) which is connected to one longitudinal side of the plate-shaped portion (40), forms an acute angle (α) with the plate face of said portion and merges into the mounting plate (38), which is arranged at a distance from the plate-shaped portion (40) and approximately parallel to it.

5. Measuring device according to Claim 4, characterized in that the heating element (60) is arranged on that side of the mounting plate (38) which is remote from the plate-shaped portion (40).

6. Measuring device according to Claim 5, characterized in that the component (30) has two connection tongues (44) which are connected to the mounting plate (38), penetrate the mounting element (14) and are fixed on the latter.

7. Measuring device according to one of Claims 5 and 6, characterized in that the component (30) has an associated contact element (34) which is made of an electrically conductive material, is supported on the heating element (60) on that side of the latter which is remote from the mounting plate (38), penetrates the mounting element (14) with a connecting lug (54) and is fixed in said mounting element.

8. Measuring device according to Claim 7, characterized in that the individual parts (32) and (34) associated with the component (30) are electrically insulated from one another.

9. Measuring device according to one of Claims 1 to 8, characterized in that at least the support part (32) associated with the component (30) is made of CuSn₆F₄₈.

## Revendications

1. Dispositif de mesure (10) dans lequel :
- un émetteur (22) et un récepteur (24) éloigné de celui-ci, tous deux optiques, sont dans la zone balayée par le dispositif d'essuyage associé à la surface de la glace (18) d'un véhicule automobile,
- la zone de la glace située entre l'émetteur (22) et le récepteur (24) constitue une zone de mesure (26) pour un rayon lumineux envoyé par l'émetteur (22) dans la glace (18) sous un angle de réflexion totale, ce rayon étant reçu par le récepteur (24) et envoyé à un dispositif d'évaluation,
- l'émetteur (22) et le récepteur (24) sont montés tous deux dans un boîtier (12) situé sur la face intérieure de la glace (18) et sont maintenus par un élément porteur (14) de préférence commun dans ce boîtier,
- le boîtier (12) ouvert au moins partiellement du côté de la glace, supporte un composant (30) comportant une partie (40) en forme de plaque située directement en face de la zone de mesure (26), ce composant (30) fait d'un matériau bon conducteur de la chaleur, pouvant être chauffé (12),
caractérisé en ce que
seule la partie (40) du composant (30) est appliquée sur la glace (18) par des éléments élastiques (40, 42, 38) sous précontrainte appartenant à une pièce d'appui (32), dont le corps (36) fait d'un matériau élastique, a essentiellement la forme d'un U dont les branches (38, 40) sont sensiblement parallèles, l'une d'elles constituant une branche de la partie (40) en forme de plaque, tandis que l'autre constitue la plaque porteuse (38) d'un élément chauffant (60).

2. Dispositif de mesure selon la revendication 1,
caractérisé en ce que
la partie (40) en forme de plaque du composant (30) est en appui sur la glace (18) par des saillies (46) qu'elle porte en face d'une surface plate de la face interne (16) de la glace.

3. Dispositif de mesure selon la revendication 2,
caractérisé en ce que
le composant (30) en matériau élastique dispose des moyens élastiques (40, 42, 38) ancrés sur l'élément porteur (14) et reliés à la partie (40) en forme de plaque.

4. Dispositif de mesure selon la revendication 3,
caractérisé en ce que
les moyens élastiques (40, 42, 38) comportent, reliée à un côté longitudinal de la partie (40) en forme de plaque et faisant avec la surface de cette plaque un angle aigu α, une bande (42) qui se continue par la plaque porteuse (38) vers la partie en forme de plaque (40) à une certaine distance et à peu près parallèlement à cette plaque.

5. Dispositif de mesure selon la revendication 4,
caractérisé en ce que
l'élément chauffant (60) est monté sur le côté de la plaque porteuse (38) tournant le dos à la partie (40) en forme de plaque.

6. Dispositif de mesure selon la revendication 5,
caractérisé en ce que
le composant (30) porte deux languettes de raccordement (44) reliées à la plaque porteuse (38) et qui traversent l'élément porteur (14) et sont fixées à celui-ci.

7. Dispositif de mesure selon la revendication 5 ou 6,
caractérisé en ce qu'
le composant (30) possède un élément de contact (34), fait d'un matériau conducteur, qui s'appuie sur le côté de l'élément chauffant (60) éloigné de la plaque porteuse (38) et traverse par une patte de raccordement (54) l'élément porteur (14) pour se fixer sur celui-ci.

8. Dispositif de mesure selon la revendication 7,
caractérisé en ce que
les parties distinctes (32) et (34) appartenant au composant (30) sont isolées électriquement de celui-ci.

9. Dispositif de mesure selon l'une des revendications 1 à 8,
caractérisé en ce qu'
au moins la pièce d'appui (32) appartenant au composant (30) est en CuSn₆F₄₈.
